# EUROPEAN PATENT APPLICATION

(11) **EP 4 137 412 A1**
(43) Date of publication of application: **22.02.2023**
(21) Application number: 21192474.1
(22) Date of filing: 20.08.2021
(51) Int. Cl.: B64D 15/20, B64D 15/00

(54) **ICE DETECTOR SYSTEM AND METHOD**

(71) Applicant: Goodrich Corporation, Charlotte, NC 28217-4578 (US)
(72) Inventor: CHABUKSWAR, Rohan, T12 D297, Cork (IE); RIDOUANE, El Hassan, Rochestown, Co. Cork (IE); BOTURA, Galdemir, Akron, 44313 (US); SUGUMARAN, Selvaraj, 560067 Bangalore (IN); ZADELL, Alex, Willoughby, 44094 (US); DEBBADI, Karthik, Cork (IE)
(74) Representative: Dehns

(57) **Abstract**

A method and system for detecting and determining icing conditions comprising:
creating a statistical model from test data (1, 2) in which set of data (1, 2) from n data inputs (12) are each plotted as a point in n-dimensional space, and wherein the n-dimensional space is divided into a plurality of regions each representative of a different icing condition (26) according to the data (1, 2) in that region;
for a set of current data (1, 2) from n data inputs (12), using the model to classify the icing condition (26) indicated by the current data (1, 2), by:
obtaining current data (1, 2) from n data inputs (12);
providing the current data (1, 2) as input data (12) to the model;
determining the region of the model in which the current data (1, 2) set is located;
and identifying the icing condition (26) indicated by the current data (1, 2) set according to the determined region.

## Description

### TECHNICAL FIELD

The present disclosure relates generally to ice detection systems and methods, and more specifically to an ice detector system, and method for detecting and distinguishing different icing conditions.

### BACKGROUND

There are many areas where it is useful or important to detect an icing or freezing condition so that action can be taken to avoid or mitigate the effects of such conditions. Icing on aircraft and other vehicles, structures, and systems, can be a hazardous safety concern. For example, governmental agencies, such as the Federal Aviation Administration ("FAA") in the United States of America and the European Aviation Safety Agency ("EASA") in Europe, often establish rules and safety requirements that relate to icing on aircraft and aircraft are often fitted with sensors to detect icing and/or de-icing systems. In the aircraft industry, standards exist for aircraft in relation to them being permitted to operate in different icing or freezing conditions. Aircraft may need to be certified to operate in conditions that are classified by the FAA as "Appendix C icing conditions" (see FAA CFR 14 Part 25). More recently, concerns have been raised about different icing conditions e.g. so-called 'Supercooled Large Droplets' or SLDs which have, over the last three decades, caused a number of accidents and safety events. Aircraft that are certified to operate in Appendix C conditions may still not be sufficiently robust against SLD conditions etc. The FAA has recently issued heightened rules, at least for certain types of aircraft, pertaining to conditions in which specific water content and altitudes in the atmosphere result in the formation of SLDs. These conditions, which are not covered by Appendix C icing conditions, are referred to as 'Appendix O' icing conditions. Only aircraft that are certified for Appendix O conditions may operate in such conditions. For aircraft, there is, therefore, a need to be able to distinguish between dry, or not freezing conditions, Appendix C conditions or Appendix O conditions, since the aircraft may need to remove itself from conditions that may arise but for which the aircraft is not certified. The ability to detect and distinguish between different icing or freezing conditions is also important in other areas e.g. other vehicles, such as trains, automobiles and ships, but also in other fields of industry e.g. wind turbines, machinery etc.

Traditionally, icing condition detection has been performed by optical detection using a reverse polarized laser, magneto-restrictive detection e.g. by monitoring the frequency change on magnetic probes, temperature detection based on water content estimation or by monitoring electric field variation in capacitive elements. Sensing using dual-layer heating and temperature measurements can be used for such detection and the sensor parameters e.g. sampling frequency, temperature, etc. can be controlled to provide faster or more reliable detection based on the confidence levels of the detection as well as, for example, how close the conditions are to the boundary between Appendix C and Appendix O conditions. With such systems and methods, though, the sensor data needs to be analysed on board the vehicle in real time. Conventional ice detection and/or de-icing systems and methods are unable to differentiate the Appendix C icing conditions from the Appendix O icing conditions, and thus aircraft may have insufficient de-icing protocols to handle Appendix O icing conditions, thus resulting in potential safety concerns.

### SUMMARY

The present disclosure provides a method of determining and differencing icing conditions comprising: creating a statistical model from test data in which set of data from n data inputs are each plotted as a point in n-dimensional space, and wherein the n-dimensional space is divided into a plurality of regions each representative of a different icing condition according to the data in that region; for a set of current data from n data inputs, using the model to classify the icing condition indicated by the current data, by: obtaining current data from n data inputs; providing the current data as input data to the model; determining the region of the model in which the current data set is located; and identifying the icing condition indicated by the current data set according to the determined region.

To reduce the amount of computation required, the statistical model may comprise a hierarchical model comprising two or more levels, and wherein using the model to classify the icing condition comprises: providing the current data as input data to a first level of the model; determining a region of the first level of the model in which the current data is located; identifying a first level of icing condition according to the determined region of the first level; providing the current data to a subsequent level based on the determined region of the first level: determining a region of the subsequent level in which the current data is located; identifying the icing condition for the current data set according to the determined region of the subsequent level.

The first region may be indicative of a dry condition and a second region indicative of a freezing condition. In one example, the first level defines different regions indicative of a dry condition and a freezing condition, and a second level defines different regions indicative of a freezing condition of a first type e.g. Appendix C, and of a freezing condition of a second type, e.g. Appendix O.

Also provided is a system for detecting a classifying icing conditions, comprising: means for storing a statistical model from test data in which set of data from n data inputs are each plotted as a point in n-dimensional space, and wherein the n-dimensional space is divided into a plurality of regions each representative of a different icing condition according to the data in that region; means for obtaining current data inputs and providing them to the statistical model, means for performing an algorithm to determine the region of the model in which the current data set is located; and identify the icing condition indicated by the current data set according to the determined region.

### BRIEF DESCRIPTION

Examples of a system and method according to the disclosure will now be described with reference to the drawings. The description is given by way of example only. The scope of the invention is as defined by the claims.
FIG. 1 is a schematic of a sensor architecture according to this disclosure;
FIG. 2 shows an example of calculation of sensor statistics according to the disclosure;
FIGS. 3A and 3B show how parameters for performing condition determination can be classified;
FIG. 4 is an example of sensors mounted to an aircraft surface.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein without departing from the scope of the invention as defined by the claims. Thus, the detailed description herein is presented for purposes of illustration only and not of limitation.

Disclosed herein, according to various embodiments, are systems and methods for ice detection. More specifically, the present disclosure provides systems and methods for detecting icing conditions and for facilitating distinguishing between different icing conditions. While examples and details herein pertain to implementing the disclosed ice detection apparatus and system in conjunction with an aircraft (e.g., for improving flight safety by detecting and distinguishing between different icing conditions during flight), the ice detection system and method may be implemented for other structures and systems, such as other vehicles, buildings, bridges, wind turbines, power cables, etc.

According to the present disclosure, icing conditions are detected and distinguished by hierarchical classification using statistical models. The first level is a classifier between dry (non-freezing) and freezing conditions. If a freezing condition is identified, a second level is a classifier between different icing conditions e.g. between Appendix C and Appendix O conditions. This is just one example, and the second level could distinguish between other icing conditions. Further levels could conceivably also be added to further classify conditions.

The classifiers can be linear or quadratic, and use parameters that are pre-programmed using test data e.g. data from simulation, wind tunnel tests, flight tests or the like.

The sensor inputs may be compared to known statistics to remove outliers. The initial statistics are taken from sensor specifications and are updated using the non-outlier measurements.

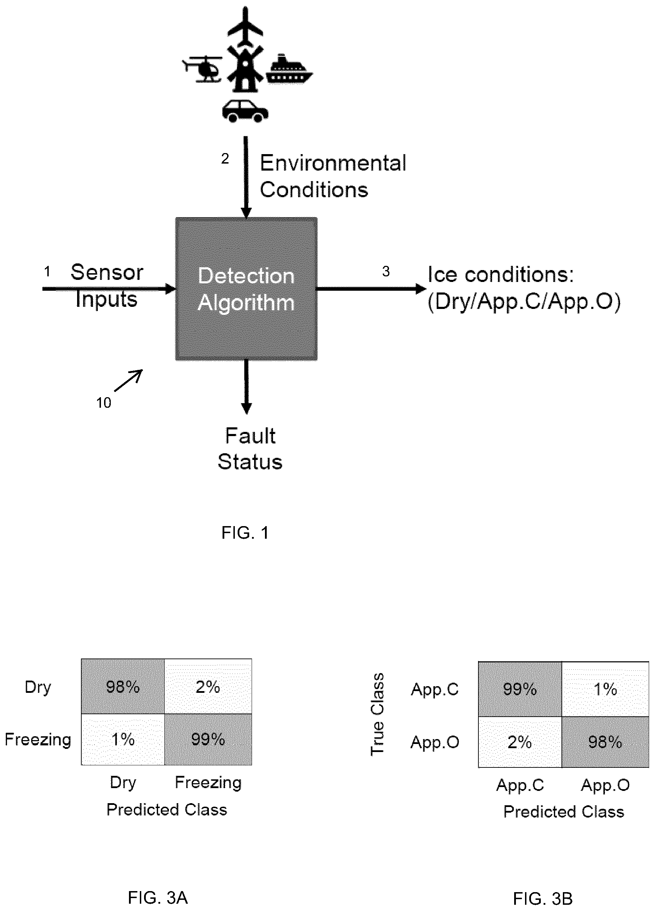

According to the disclosure, with reference to Fig. 1, icing conditions are determined using a detection algorithm 10 that receives inputs, 1, from various sensors e.g. sensors on an aircraft surface or the like and, preferably, inputs, 2, indicative of environmental conditions, and provides an output 3 of the detected icing condition classification e.g. dry, Appendix C or Appendix O.

The algorithm 10 is a multi-class classification algorithm designed using statistical models. Each data set - i.e. set of data from the various sensors and inputs - is plotted as a point in n-dimensional space, where n is the number of data inputs, which includes data, 1, from the sensors plus other data, 2, e.g. from internal measurements e.g. power, data from the flight deck such as air speed, static air temperature, angle of attack, angle of side-slip, etc.. All the data points corresponding to a single condition class are considered to be samples from a multi-variate distribution. As seen in Figs 3A and 3B, the n-dimensional space is divided into regions 'belonging' to each condition class, in which regions the probability distribution of the condition is greater than all other conditions. E.g. one region may include a set of data points which are more likely to indicate a dry condition, another may include the set of data points which are more likely to indicate an Appendix O condition.

To minimize processing, a first level of classification is performed on the input data 1,2. Based on the pre-programmed parameters, it is determined in which region the condition is in the n-dimensional space. At the first level, in this example, the n-dimensional space is divided into regions where, based on the probability distribution, it is more likely that the condition is dry, and regions where, based on the probability distribution, it is more likely that the conditions are freezing. In the example of Fig. 3A, 98% of dry conditions (from data used in validating the model) are predicted by the model to be dry and 99% of true freezing conditions are detected by the model as freezing. As an example, the first classifier can be a quadratic classifier. A numerical check is carried out on each vector of sensor values x:x^{T}Ax + Bx = C <>0, where a negative value indicates a dry condition and a positive value indicates a freezing condition. If all n² components of A are 0, the classifier is a linear classifier. In the algorithm, x is an n x 1-dimensional vector composed of the input data values, T indicates transpose, A is the n x n matrix of quadratic coefficients, B is the 1 x n vector of linear coefficients and C is a scalar constant. If the condition is classified as 'freezing' a different classifier is used to determine whether the freezing condition falling under Appendix C or Appendix O (Fig. 3B). Again, a numerical check is performed on the same vector of sensor values x;x^{T}Px+Qx+R <> 0, where a negative value indicates Appendix C conditions and a positive value indicates Appendix O conditions. Here, P is the n x n matrix of quadratic coefficients for the second test, Q is the 1 x n vector of linear coefficients and R is a scalar constant Again, all n² components of P could be 0, in which case the classifier is linear. Of course, other classification rules and parameters may also apply and 'positive' and 'negative' above could be inverted. The parameters of the classifications - A, B, C, P, Q and R - are pre-programmed using a combination of results from simulation, testing etc. The classification parameters can be verified before use using methods such as Leave One Out Cross Validation (LOOCV).

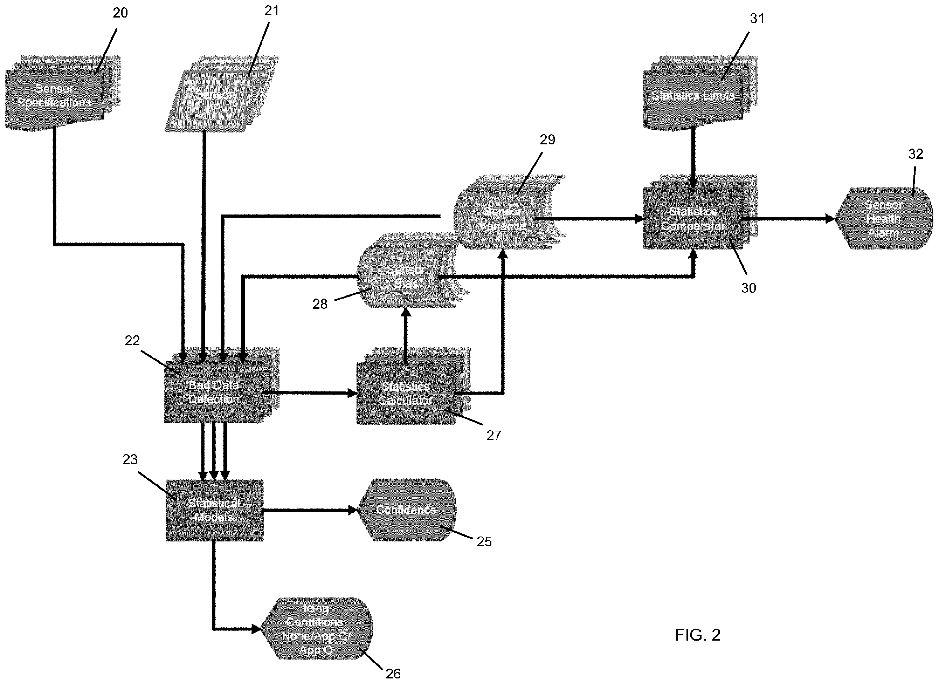

The data inputs 1,2 are compared to known statistics, initially e.g. from sensor specifications, to avoid outliers being used in the classification. The initial statistics can be taken from sensor specifications as shown in Fig. 2. In this example, initially, sensor specifications 20 and the sensor inputs 21 are input to a bad data detection stage 22. Non-outliers are used to form statistical models 23. Based on this, the level of confidence 25 can be derived. The statistical models are used to determine the icing condition 26 as discussed above. Output from the bad data detection stage 22 that cannot be identified immediately as a non-outlier is provided to a statistics calculator 27. Depending on sensor bias 28 and sensor variance 29, the data may be provided back to the bad data detection stage 22 or may be provided to a statistics comparator 30. Depending on statistics limits 31, a sensor health alarm 32 might be output.

By determining icing conditions using direct sensing of atmospheric conditions and/or sensor inputs e.g. indicating ice accretion of the sensed surface such as an airframe, an accurate detection and discrimination of icing conditions can be achieved in real time. This can result in fewer failure or safety events. The overall effect will also be to decrease costs for all concerned by allowing improved and internationally accepted certification, standards and compliance for a wide range of ice hazards. Ice hazards can be detected quickly and addressed or avoided more quickly thus leading to less damage that needs to be inspected and repaired - e.g. an aircraft is able to quickly detect an unsuitable condition and remove itself from that condition before damage occurs.

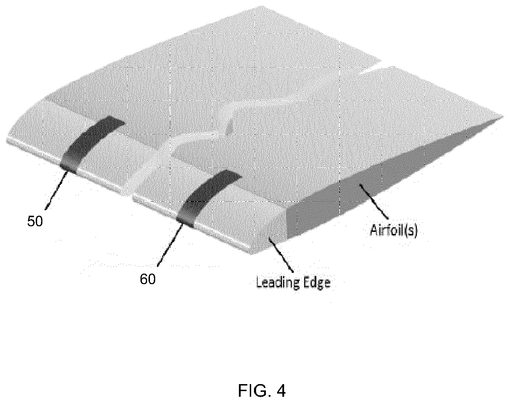

Figure 4 shows and aircraft wing or aileron on which heaters 50, 60 can be mounted. The heaters have multiple temperature sensors (not shown) to sense the temperature distribution on the heater 50, 60, which will change with icing conditions (water content, droplet size etc.). The heater, depending on icing conditions, will need to be heated using a specific amount of power, which can provide one input indicative of conditions. The temperature will, as mentioned above, also change due to conditions, due to water content, which is sensed by the sensors to provide another input to the system. The algorithm also uses other inputs 2, which can be atmospheric or external conditions as well as, e.g. flight deck information.

By using a statistical model based on test data, it is possible to detect and classify current ice conditions based on sensed data input to the model, thus allowing an accurate detection in real time.

Whilst embodiments have been described above, variations are possible within the scope of the invention as defined by the claims.

## Claims

1. A method of detecting and determining icing conditions comprising:
creating a statistical model from test data in which set of data from n data inputs are each plotted as a point in n-dimensional space, and wherein the n-dimensional space is divided into a plurality of regions each representative of a different icing condition according to the data in that region;
for a set of current data from n data inputs, using the model to classify the icing condition indicated by the current data, by:
obtaining current data from n data inputs;
providing the current data as input data to the model;
determining the region of the model in which the current data set is located; and
identifying the icing condition indicated by the current data set according to the determined region.

2. The method of claim 1, wherein the statistical model comprises a hierarchical model comprising two or more levels, and wherein using the model to classify the icing condition comprises:
providing the current data as input data to a first level of the model;
determining a region of the first level of the model in which the current data is located;
identifying a first level of icing condition according to the determined region of the first level;
providing the current data to a subsequent level based on the determined region of the first level:
determining a region of the subsequent level in which the current data is located;
identifying the icing condition for the current data set according to the determined region of the subsequent level.

3. The method of claim 1 or 2, wherein a first region is indicative of a dry condition and a second region is indicative of a freezing condition.

4. The method of claim 2, wherein the first level defines different regions indicative of a dry condition and a freezing condition, and a second level defines different regions indicative of a freezing condition of a first type and of a freezing condition of a second type.

5. The method of claim 4, wherein the first type corresponds to icing envelopes defined on Appendix C conditions and the second type corresponds to Appendix O conditions.

6. The method of any preceding claim, wherein the model performs an algorithm on the input data to determine the region, according to the following: xTAx + Bx = C <>0, where a negative value indicates a first region and a positive value indicates a second region, where x is an n x 1-dimensional vector composed of the input data values, T indicates transpose, A is the n x n matrix of quadratic coefficients, B is the 1 x n vector of linear coefficients and C is a scalar constant.

7. The method of any preceding claim, wherein the data inputs include data from sensors and/or environmental data.

8. The method of claim 7, wherein the data inputs include data indicative of: temperature, power, speed, pressure, angles of attack and side slips.

9. The method of any preceding claim for detecting icing conditions on an aircraft.

10. The method of any of claims 1 to 8, for detecting icing conditions on one or more of wind turbines, ships, land vehicles, drones.

11. The method of claim 10, wherein the data inputs include data from sensors and/or external data and/or data from the flight deck.

12. A system for detecting a classifying icing conditions, comprising:
means for storing a statistical model from test data in which set of data from n data inputs are each plotted as a point in n-dimensional space, and wherein the n-dimensional space is divided into a plurality of regions each representative of a different icing condition according to the data in that region;
means for obtaining current data inputs and providing them to the statistical model,
means for performing an algorithm to determine the region of the model in which the current data set is located; and identify the icing condition indicated by the current data set according to the determined region.

13. The system of claim 12, wherein the means for obtaining the current data comprise a plurality of sensors.
